# FASCICULE DE BREVET EUROPEEN

(11) **EP 2 201 263 B1**
(45) Date de publication et mention de la délivrance du brevet: **07.12.2011**
(21) Numéro de dépôt: 08838729.5
(22) Date de dépôt: 13.10.2008
(51) Int. Cl.: F16F 9/53

(54) **DISPOSITIF D'AMORTISSEMENT APTE À OFFRIR UNE RAIDEUR AUGMENTÉE**
DÄMPFUNGSVORRICHTUNG FÜR ERHÖHTE STEIFIGKEIT
DAMPING DEVICE CAPABLE OF PROVIDING AN INCREASED STIFFNESS

(30) Priorité: 15.10.2007 FR 0758326
(43) Date de publication de la demande: 30.06.2010
(73) Titulaire: Commissariat à l'Énergie Atomique et aux Énergies Alternatives, 75015 Paris (FR); Centre National de la Recherche Scientifique, 75016 Paris (FR)
(72) Inventeur: BOUTILLON, Xavier, F-92160 Antony (FR); HAFEZ, Moustapha, F-94110 Arcueil (FR); LOZADA, José, F-94260 Fresnes (FR)
(74) Mandataire: Ilgart, Jean-Christophe
(86) Numéro de dépôt international: PCT/EP2008/063697
(87) Numéro de publication internationale: WO 2009/050135

(56) Documents cités:
- WO-A-2006/051301
- JP-A- 63 231 028
- US-A1- 2001 041 637

## Description

### DOMAINE TECHNIQUE ET ART ANTÉRIEUR

La présente invention se rapporte à un amortisseur à fluide magnéto-rhéologique, et plus généralement à un dispositif apte à générer une résistance à un mouvement par modification de la viscosité apparente d'un fluide magnéto-rhéologique par modulation d'un champ magnétique, ce dispositif pouvant être utilisé dans des systèmes de simulation tactile ou haptique pour opposer à l'avance d'un organe de commande manuel, une réaction reflétant le déroulement de la commande.

Les interfaces homme-machine utilisées, par exemple en réalité virtuelle, doivent présenter deux caractéristiques antagonistes, d'une part permettre des mouvements à vide les plus faciles possibles pour simuler un déplacement libre, et d'autre part être capables d'offrir une raideur élevée pour simuler, par exemple un solide ou un mur virtuel.

Il est par exemple connu d'utiliser des moteurs électromagnétiques classiques de type connu pour produire des forces résistantes. La raideur de tels systèmes pouvant produire de l'énergie (systèmes pleinement actifs) est toujours un facteur limitant de sa stabilité.

Un amortisseur semi-actif est un système qui ne peut qu'absorber de l'énergie et dont le coefficient d'amortissement peut être contrôlé en fonction des sollicitations, par un système de commande. Certaines interfaces utilisent des freins semi-actifs rotatifs, qui présentent l'inconvénient d'être encombrants. D'autres interfaces utilisent des amortisseurs semi-actifs, mais ceux-ci présentent souvent une force à vide trop élevée.

Le document US 2007/0013655 décrit un dispositif reproduisant la réaction ressentie par un pécheur lorsqu'il manipule le moulinet dans un jeu de simulation de pêche, ou par un cycliste lors de l'appui sur les pédales pour un vélo d'appartement.

Ce dispositif utilise une plaque mobile en translation dans un entrefer délimité par deux branches d'un U sur lesquelles sont fixées des éponges imbibées de fluide magnéto-rhéologique.

La plaque mobile, lors de son déplacement en translation, frotte sur les éponges. En modifiant le champ magnétique dans l'entrefer, la viscosité apparente du fluide magnéto-rhéologique contenu dans les éponges varie ce qui modifie la résistance à l'avancement de la plaque.

Ce système a une durée de vie limitée du fait du frottement permanent de la plaque sur les éponges. Par ailleurs, cette construction ne peut générer qu'un amortissement limité, notamment du fait de l'action limitée du fluide magnéto-rhéologique sur la plaque, la surface de contact étant faible. Ce système ne permet donc pas de réaliser un amortisseur efficace dans de nombreuses situations tout en conservant une taille acceptable. En effet, si un amortissement important était requis, une plaque de grande taille serait requise afin que les efforts de cisaillement générés dans le fluide magnéto-rhéologique soient suffisants pour provoquer l'amortissement requis. Ceci impliquerait par conséquent un dispositif d'amortissement de grande taille dont l'utilisation serait limitée.

Le document US 2004/0084887 décrit un dispositif destiné à éviter les vibrations dans une direction de véhicule automobile. Ce dispositif est inséré dans la colonne de direction et comporte un boîtier rempli de fluide magnéto-rhéologique, un rotor solidaire en mouvement d'une partie supérieure de l'arbre de direction et de bobines électriques pour générer un champ magnétique au sein du boîtier. Le rotor est formé d'un disque dont l'axe est confondu avec celui de l'arbre de direction, ce disque comportant également des perçages axiaux et des dents à sa périphérie. Les dents et les perçages provoquent des efforts normaux et de cisaillement dans le fluide magnéto-rhéologique, ce qui permet à la fois de réduire les vibrations en rotation et dans la direction axiale. Ce dispositif présente l'inconvénient d'être encombrant.

Le document WO 2006/051301 présente un dispositif d'amortissement considéré comme l'état de la technique le plus proche. C'est par conséquent un but de la présente invention d'offrir un dispositif d'amortissement à fluide magnéto-rhéologique apte à offrir des efforts d'amortissement importants, tout en restant compact et ayant une durée de vie allongée.

### EXPOSÉ DE L'INVENTION

Le but précédemment énoncé est atteint par un dispositif comportant une chambre contenant un fluide magnéto-rhéologique et au moins une lame apte à se déplacer en translation selon son axe dans le fluide magnéto-rhéologique, cette lame comportant sur ses faces de plus grande surface des nervures et/ou des perçages traversant afin d'augmenter la résistance au déplacement dans le fluide magnéto-rhéologique lorsque sa viscosité est augmentée par l'application d'un champ magnétique.

En d'autres termes, la lame n'est pas lisse à l'échelle du dispositif, elle comporte des reliefs en saillie ou en creux sur l'une ou les deux faces de plus grande surface. Ainsi lorsqu'un champ magnétique est appliqué, les chaînes de particules magnétiques contenues dans le fluide magnéto-rhéologique se formant lors de l'application d'un champ magnétique se trouvent au niveau des reliefs et forment des obstacles au déplacement de ceux-ci, et/ou la lame comporte des perçages, dans ce cas les chaînes de particules se forment à travers la lame dans les perçages et forment également des obstacles pour le déplacement de la lame.

Ainsi, le dispositif offre un amortissement plus important dans un encombrement réduit.

La présente invention permet de générer une résistance importante tout en gardant une force à vide à des niveaux tolérables. D'une part, l'utilisation d'un frein linéaire à base de fluide magnéto-rhéologique permet d'augmenter la force résistante. D'autre part, puisque le frein ne peut que dissiper l'énergie mécanique, il a une action stabilisatrice sur le système.

On utilise le fluide magnéto-rhéologique en cisaillement avec des lames minces, ce qui permet de réduire la taille du système tout en conservant une résistance élevée.

La présente invention a alors principalement pour objet un dispositif amortisseur pour opposer au déplacement d'un organe de commande manuelle une réaction, ledit dispositif comportant au moins une chambre contenant du fluide magnéto-rhéologique, au moins un moyen de génération d'un champ magnétique adaptable dans le fluide magnéto-rhéologique de manière à modifier sa viscosité apparente, au moins un élément mobile en translation apte à cisailler le fluide magnéto-rhéologique et destiné à être relié mécaniquement à l'organe de commande manuelle, ledit élément comportant au moins une lame d'axe longitudinal comportant des trous et/ou des évidements et/ou des saillies.

La lame peut être réalisée en matériau amagnétique, elle peut alors comporter des fentes parallèles et/ou des perçages.

Dans une variante de réalisation, la lame comporte une âme en matériau magnétique munie de trous et/ou d'évidements et/ou de saillies et des bandes en matériau amagnétique sur ses extrémités latérales sur ses deux faces.

Dans une autre variante de réalisation, la lame comporte une âme pleine et deux plaques en matériau amagnétique munies de fentes recouvrant chaque face de l'âme pleine. Grâce à cette variante de réalisation, un phénomène de raclage apparaît.

Il est également envisageable d'avoir un élément mobile comportant plusieurs lames parallèles, ce qui permet d'obtenir des niveaux d'effort d'amortissement encore plus élevés pour un encombrement équivalent.

Dans un mode de réalisation, le dispositif comporte un moyen générateur de champ magnétique, dont l'entrefer forme ladite chambre remplie de fluide magnéto-rhéologique, ledit entrefer comportant une entrée à chacune de ses extrémités longitudinales traversée par la lame, la lame se déplaçant le long de son axe longitudinal.

Le moyen générateur de champ magnétique peut, par exemple comporter deux noyaux en forme de E en vis-à-vis de sorte que des extrémités des branches centrales des pôles en forme de E soient en regard, délimitant ainsi l'entrefer et des bobines montées sur les branches centrales.

Par exemple, ce dispositif peut comporter un organe de commande à chacune des extrémités et deux membranes souples, chacune fixée de manière étanche sur le moyen générateur de champ magnétique autour des entrées de l'entrefer et l'organe de commande. L'utilisation d'une membrane souple pour réaliser l'étanchéité permet d'éviter l'apparition de forces de frottement susceptibles de détériorer la qualité de l'amortissement.

Dans un autre mode de réalisation, le dispositif d'amortissement comporte deux moyens générateurs de champs magnétique définissant chacun un entrefer formant deux chambres remplies de fluide magnéto-rhéologique, lesdits entrefers étant munis d'une seule entrée à une extrémité longitudinale, les moyens générateurs de champ magnétique étant disposés à distance l'un de l'autre et de telle sorte que les entrées des entrefers soient en vis-à-vis et que les entrefers reçoivent chacun une extrémité longitudinale de la lame, la lame se déplaçant selon son axe.

La mise en oeuvre de deux moyens d'amortissement agissant chacun sur une extrémité de la lame, la lame se déplaçant selon son axe longitudinal, permet d'exercer des efforts équilibrés sur la lame et sur des surfaces constantes. En effet, la surface se trouvant dans l'entrefer et cisaillant le fluide magnéto-rhéologique est toujours la même.

Le dispositif peut comporter une membrane souple entourant les entrées et l'organe de commande réalisant un ensemble étanche, l'organe de commande manuelle étant fixé sensiblement au centre de la lame orthogonalement à son axe longitudinal.

De manière avantageuse, l'organe de commande est en deux parties, une partie fixée sur la lame et une partie fixée sur la partie fixée sur la lame, la membrane étant pincée entre les deux parties. La fixation étanche est alors réalisée de manière très simple et très efficace.

On peut envisager que le ou les entrefers soient divisés en autant d'entrefers que de lames au moyen de plaques magnétiques, chaque entrefer recevant une lame.

La présente invention a également pour objet un système d'amortissement comportant un dispositif amortisseur selon la présente invention, une source d'alimentation en énergie électrique du ou des moyens de génération de champ magnétique, au moins un capteur d'une grandeur cinématique et/ou dynamique représentative du mouvement de cet élément ou de l'organe de commande et un organe de contrôle, ledit capteur étant relié à l'organe de contrôle, lui-même relié au(x) moyen(s) de génération d'un champ magnétique, l'ensemble étant tel que la viscosité apparente du fluide magnéto-rhéologique varie au cours du déplacement de l'organe de commande manuelle. Le au moins un capteur est un capteur d'accélération, de vitesse et/ou de déplacement.

La présente invention a également pour objet un système de simulation, de type interface haptique comportant un système selon la présente invention.

### BRÈVE DESCRIPTION DES DESSINS

La présente invention sera mieux comprise à l'aide de la description qui va suivre et des dessins en annexe sur lesquels :
- la figure 1 est une vue en perspective d'un mode de réalisation d'un dispositif d'amortissement selon la présente invention, la membrane flexible n'étant pas représentée,
- la figure 2A est une vue en perspective d'un exemple de réalisation d'une lame apte à être utilisée dans le dispositif de la figure 1 représenté partiellement,

- la figure 2B est une vue en plan agrandie de la lame de la figure 2A,
- la figure 3 est une vue éclatée d'un autre exemple de réalisation d'une lame pour un dispositif selon l'invention,
- la figure 4 est une vue éclatée d'un autre exemple de réalisation d'une lame pour un dispositif selon l'invention,
- les figures 5A et 5B sont des vues en perspective partielle d'un moyen de génération de champ magnétique du dispositif d'amortissement de la figure 1,
- la figure 6 est une vue de côté du moyen de génération de champ magnétique des figures 5A et 5B,
- la figure 7 est une vue de face du dispositif de la figure 1 complet,
- la figure 8 est une vue de dessus d'un autre mode de réalisation d'un dispositif d'amortissement selon l'invention,
- la figure 9 représente des vues en perspective de côté d'un montage particulier permettant l'utilisation de deux lames,
- la figure 10 est une représentation schématique d'un système d'amortissement fonctionnant en temps réel.

### EXPOSÉ DÉTAILLÉ DE MODES DE RÉALISATION PARTICULIERS

Dans la présente demande, un organe de commande manuelle ne se limite pas à un organe déplacé au moyen d'une main, mais comprend tout organe apte à être déplacé par un autre membre, par exemple un pied.

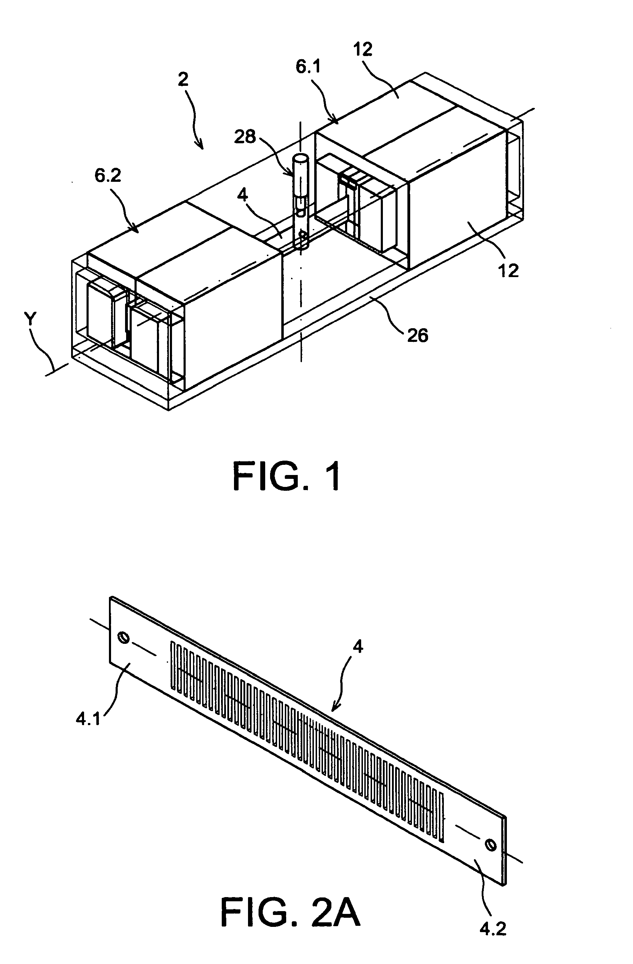

Sur la figure 1, on peut voir un mode de réalisation d'un dispositif d'amortissement 2 à fluide magnéto-rhéologique selon la présente invention comportant un élément mobile formé d'une seule lame 4 en matériau amagnétique, par exemple en laiton, apte à se déplacer dans un plan moyen P de la lame parallèle à ses deux faces de plus grande surface.

On entend par «lame» dans la présente demande, un élément ayant une longueur et une largeur grandes par rapport à son épaisseur et offrant une certaine souplesse dans une direction normale au plan moyen P.

Dans l'exemple représenté, la lame 4 est apte à se déplacer le long d'un axe Y suivant la plus grande dimension de la lame 4.

La lame 4 comporte une première extrémité 4.1 et une deuxième extrémité 4.2 selon l'axe Y, chacune de ces extrémités étant disposée dans un entrefer de moyens de génération de champ magnétique 6.1, 6.2.

Selon la présente invention, la lame comporte des reliefs en saillie ou en creux et/ou des perçages, comme nous le décrirons plus en détail dans la suite de la description.

Nous allons décrire le moyen de génération de champ magnétique 6.1; le moyen 6.2 étant similaire, celui-ci ne sera pas décrit en détail.

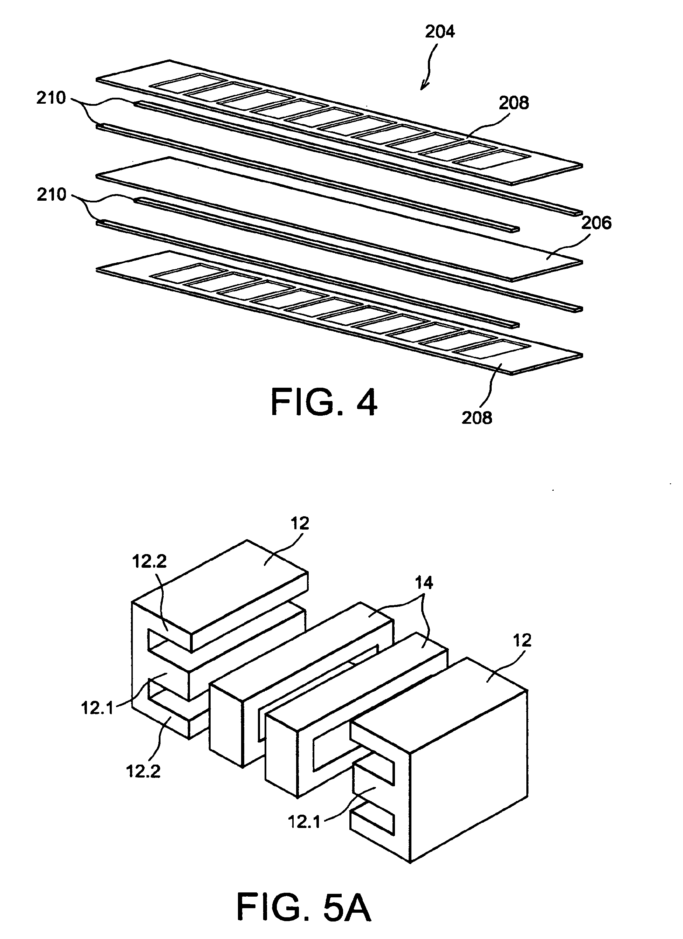

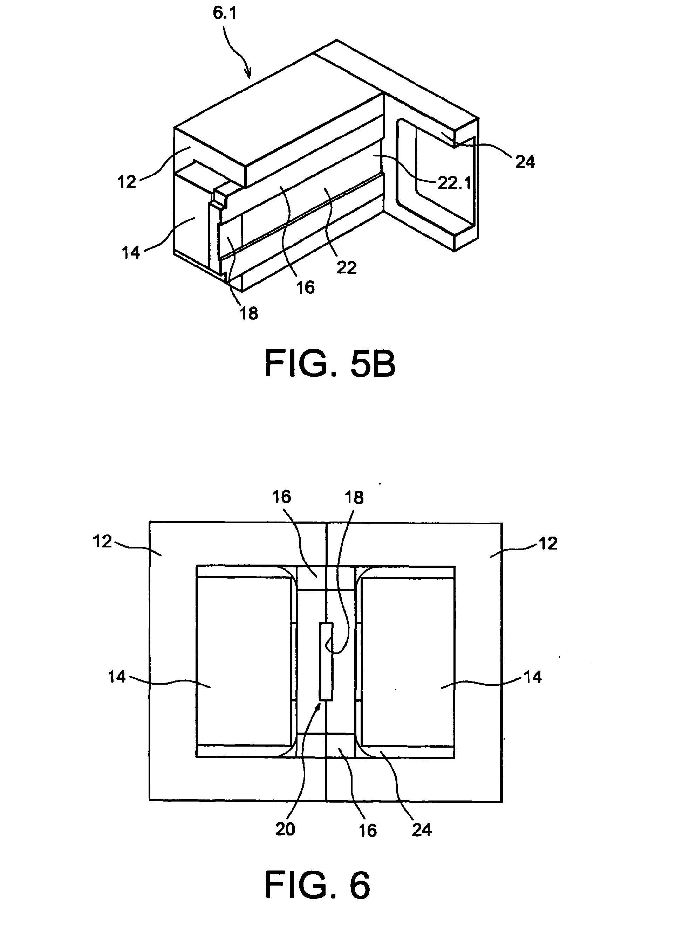

Le moyen de génération de champ magnétique 6.1 visible particulièrement sur les figures 5A, 5B et 6, délimite un entrefer contenant le fluide magnéto-rhéologique dans lequel la lame 4 peut se déplacer.

Un fluide magnéto-rhéologique est une suspension de particules ferromagnétiques de taille micrométrique dans un fluide porteur, par exemple huile minérale ou synthétique ou eau.

Dans l'exemple particulier représenté, le moyen de génération de champ magnétique 6.1 comporte deux pôles 12 en matériau ferromagnétique, par exemple en fer doux, ferrite ou alliage à haute perméabilité magnétique, en forme de E et de deux bobines 14. Chaque bobine 14 est disposée autour de la barre centrale 12.1 du E. Les deux pôles 12 sont disposés de telle sorte que les barres soient en regard. Par ailleurs, les barres centrales ont une longueur inférieure à celles des barres d'extrémité 12.2, de telle sorte que les barres centrales délimitent l'entrefer par leurs extrémités en regard.

Par exemple, cet entrefer mesure 1 mm d'épaisseur.

Le dispositif d'amortissement 2 comporte également au niveau de l'entrefer un système d'étanchéité permettant de contenir le fluide magnéto-rhéologique.

Le système d'étanchéité comporte, dans l'exemple représenté deux pièces 16 en forme de U enfilées chacune sur une barre centrale 12.1 du U selon l'axe Y, ces pièces 16 sont par exemple collées ou ajustées de manière serrée, ce qui permet d'assurer l'étanchéité latérale du dispositif au niveau du moyen de génération de champ magnétique 6.1.

On peut également envisager de n'utiliser qu'une seule pièce en forme de U 16 à cheval sur les deux barres centrales 12.1, la pièce comportant un passage pour la lame.

Chaque pièce en forme de U 16 comporte une rainure 18 au niveau de la base du U et s'étend jusqu'à la partie évidée du U, cette rainure a une largeur sensiblement égale à celle de la barre centrale du pôle et une profondeur égale à la moitié de celle de l'entrefer.

Les pièces en forme de U 16 sont disposées de telle sorte que les deux rainures 18 soient en regard l'une de l'autre et délimitent un canal 20 de section rectangulaire selon l'axe Y vers une chambre 22 délimitée par les parties centrales évidées du U. Une extrémité de ce passage 20 est visible de face sur la figure 6.

Le canal 20 permet le passage de la lame.

Il est bien-entendu que tout système d'étanchéité permettant un guidage de la lame entre dans le cadre de la présente invention.

Ce passage 20 permet le passage de la lame 4, comme nous le décrirons par la suite.

Le système d'étanchéité comporte également une plaque 24 obturant de manière étanche une extrémité 22.1 de la chambre 22, opposée au passage 20 selon l'axe Y. Celle-ci est par exemple collée.

Dans l'exemple représenté, la plaque 24 comporte deux évidements et une nervure centrale obturant l'extrémité 22.1 de la chambre 22. Les deux évidements permettent de ménager la place nécessaire aux extrémités des bobines qui entourent les barres centrales des E du noyau magnétique. La nervure centrale vient en contact avec les pièces en forme de U 16, assurant ainsi l'étanchéité sans entrer en collision avec les bobines.

Les pièces en forme de U 16 et les plaques 24 sont réalisées en matériau amagnétique, par exemple en plexiglas ®.

Les deux moyens de génération de champ magnétique 6.1, 6.2 sont immobilisés l'un par rapport à l'autre en les fixant sur un châssis 26, de telle sorte que les passages 20 soient en regard l'un de l'autre.

La lame est montée dans les moyens de génération de champ magnétique 6.1, 6.2, en particulier la lame traverse les passages 20 et les extrémités longitudinales de la lame sont logées dans les chambres 22.

A la place de noyaux ayant une forme en E, on pourrait prévoir deux pièces en forme de U en vis-à-vis, dont l'une des branches de chaque U est plus courte de sorte à ménager un entrefer.

Le dispositif d'amortissement 2 comporte également un organe de commande 28 par lequel un effort exercé par un opérateur est transmis à la lame et par lequel la lame exerce un effort d'amortissement ressenti par l'opérateur.

Dans l'exemple représenté, cet organe 28 est formé par une tige fixée dans une partie centrale de la lame 4, orthogonalement à l'axe Y de la lame 4.

Une étanchéité est également réalisée entre les deux moyens de génération de champ magnétique 6.1, 6.2 et l'organe de commande pour éviter toute fuite de fluide magnéto-rhéologique.

Cette étanchéité est réalisée de manière avantageuse par une membrane souple déroulante 30 fixée de manière étanche aux deux moyens de génération de champ magnétique 6.1, 6.2 et sur l'organe de commande 28.

Le matériau de la membrane est choisi compatible avec le fluide magnéto-rhéologique, par exemple du nitrile.

Cette membrane a, par exemple une forme tubulaire dont chacune des extrémités est fixée autour des passages 20, par exemple les pièces en forme de U 16 et comporte une ouverture 32 sur sa périphérie pour le passage de l'organe 28. La membrane est fixée sur les pièces en forme de U 16 par collage par exemple.

À cet effet, l'organe de commande est avantageusement réalisé en deux éléments 28.1, 28.2, un premier élément 28.1 fixé à la lame et un deuxième élément 28.2 vissé sur le premier, le contour de l'ouverture 32 étant pincé entre les deux parties 28.1, 28.2 de l'organe de commande.

La membrane souple 30 permet d'assurer l'étanchéité du dispositif, tout en permettant le déplacement de la lame 4. Cette réalisation ne provoque pas de forces de frottement parasites, et donc ne perturbe pas l'intensité de l'amortissement ni le mouvement à vide.

L'utilisation de deux moyens de génération de champ magnétique disposés symétriquement de part et d'autre de l'organe de commande procure l'avantage de maintenir une surface d'interaction constante entre la lame et le fluide magnéto-rhéologique au cours du déplacement.

L'utilisation de deux générateurs de champ permet également de distribuer les forces dans la lame de sorte à diminuer le risque de flambage. En effet, le flambage d'une plaque (ou d'une poutre) dépend de la contrainte en compression sur la section et de la longueur comprimée. L'utilisation de deux générateurs de champ fait que dans son mouvement, un côté de la lame (par rapport à la position de l'organe de commande) subit une compression tandis que l'autre subit une traction. La contrainte de compression globale est donc diminuée ce qui diminue le risque de flambage.

On peut prévoir des moyens de guidage de l'organe de commande, pour éviter de solliciter la lame en torsion. Il est à noter cependant qu'en général l'organe de commande n'est pas directement lié à l'utilisateur.

Le montage de cet amortisseur s'effectue comme suit :

On monte d'abord les deux moyens de génération de champ magnétique à l'exception d'une des deux pièces 24. Puis on monte la lame et la première partie de l'organe de commande. On monte ensuite la membrane et la deuxième partie de l'organe de commande. On remplit le système de fluide MR par l'ouverture laissé par la pièce 24 manquante et on ferme le dispositif. Finalement, on fixe les deux systèmes de génération magnétique sur le bâti.

Sur les figures 2A à 4, on peut voir des exemples de réalisation de lame selon la présente invention.

Sur la figure 2A, on peut voir un exemple de réalisation, la lame réalisée en matériau amagnétique comportant des fentes 8 traversant la lame de part en part. Dans l'exemple représenté, les fentes 8 sont orthogonales à l'axe Y, mais des lames comportant des rainures parallèles à l'axe Y ou des rainures inclinées par rapport aux axes X et Y ne sortent pas du cadre de la présente invention.

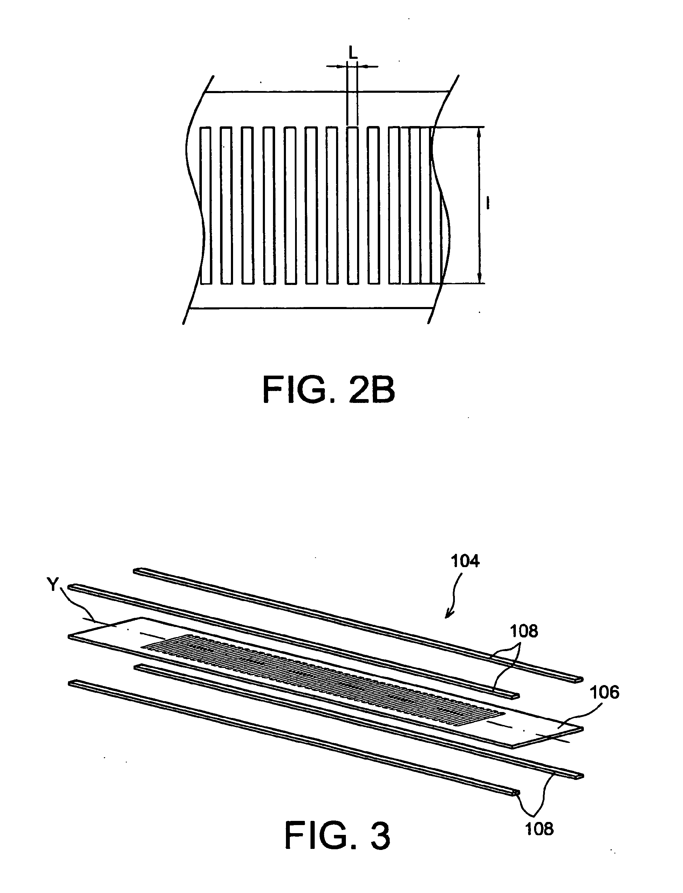

Sur la figure 2B, on peut voir les fentes agrandies. Par exemple les fentes ont une largeur L de 0,25 mm et une longueur 1 de 7 mm.

De manière avantageuse, les fentes sont perpendiculaires à la direction du mouvement, i.e. à l'axe longitudinal de la plaque dans l'exemple décrit ci-dessus, le cisaillement du fluide magnéto-rhéologique étant plus efficace dans ces cas. Mais des lames munies de fentes obliques et / ou de perçages ayant d'autres formes, par exemple circulaires, ne sortent pas du cadre de la présente invention.

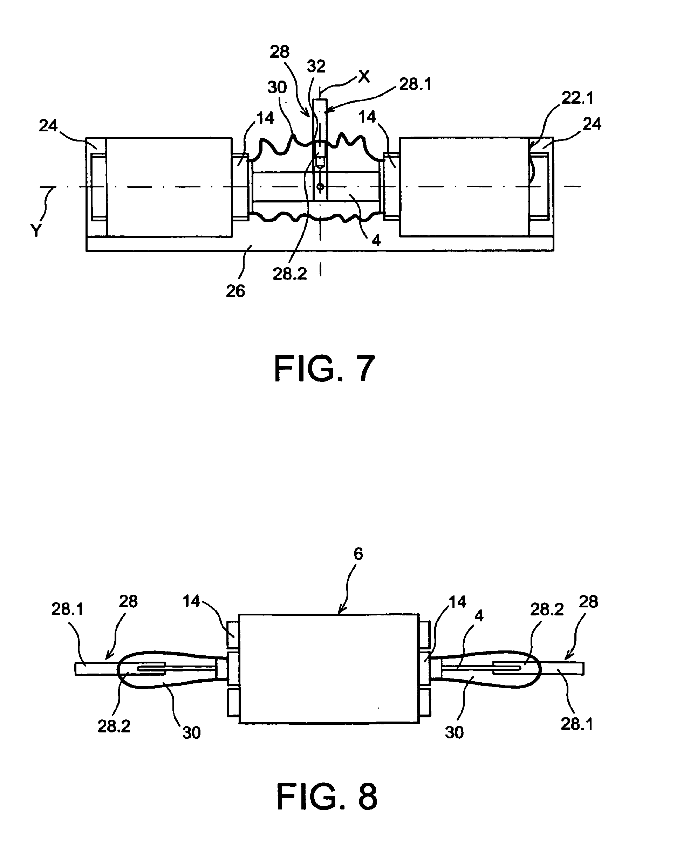

Dans l'exemple représenté, la lame 4 comporte des fentes sur sa partie centrale, cependant on pourrait prévoir dans le mode de réalisation représenté sur la figure 7, que les fentes ne soient présentes qu'au niveau des extrémités 4.1, 4.2 de la lame, au niveau desquelles la viscosité apparente du fluide magnéto-rhéologique est modifiée par les moyens de génération de champ magnétique 6.1, 6.2.

On peut également prévoir que les fentes ne soient pas rectilignes, ou ne soient pas continues sur toute la largeur ou la longueur de la lame.

On peut également prévoir que la lame comporte, non pas des fentes, mais des trous de section circulaire ou oblongue traversant la lame de part en part, ces trous pouvant être alignés ou répartis de manière aléatoire sur la lame. La limite inférieure du diamètre des perçages est choisie en fonction de la taille minimale des particules, la taille minimale étant d'environ 100 µm, la taille maximale des perçages est, quant à elle, donnée par la largeur de la plaque, de l'ordre de quelques millimètres dans le cas décrit.

La dimension de fentes et/ou des perçages et leur densité est déterminé afin d'assurer un compromis entre la force maximale d'amortissement et la tenue mécanique de la lame. En effet un nombre de fentes trop important pourrait fragiliser la lame.

La lame 4 présente une épaisseur inférieure à la largeur des passages 20. La lame 4 n'est pas, dans l'exemple représenté, en contact avec les pôles, lorsque la lame est mise en place dans les moyens générateurs de champ magnétique.

La lame amagnétique peut être réalisée par exemple en laiton, en aluminium ou en mica.

Sur la figure 3, on peut voir un autre exemple de réalisation de lame selon la présente invention 104 permettant de réaliser un corps en matériau magnétique.

La lame 104 comporte une âme 106 en forme de lame munie de fentes et ou de nervures similaire à la lame 104 de la figure 2A en matériau magnétique, et des baguettes 108 en matériau amagnétique rapportées sur l'âme 106 et bordant les côtés de plus grande longueur de l'âme 106. L'épaisseur totale de la lame est sensiblement égale à la largeur des passages 20, ainsi elle est guidée par les parois de ceux-ci lors de son déplacement selon l'axe X par l'intermédiaire des bandes rapportées 108.

L'âme 106 peut être réalisée en fer doux, en acier, en ferrite ou en alliages a perméabilité élevée, et les bandes 108, peuvent être réalisées en laiton, en aluminium, en mica, voire en matériau plastique compatible avec le fluide MR.

Les bandes sont en contact avec les pôles lorsque la lame est en place dans les moyens générateurs de champ magnétique.

Sur la figure 4, on peut voir un autre exemple de réalisation d'une lame 204 selon la présente invention comportant des rainures.

La lame 204 comporte une âme 206 en matériau magnétique, et deux plaques 208 amagnétiques munies de fentes rapportés sur les deux faces de l'âme, formant ainsi des rainures dans les faces de la lame. Des baguettes 210 sont rapportées sur l'âme, bordant les côtés de plus grande longueur de l'âme 206. L'épaisseur de cet assemblage est telle qu'elle correspond à la largeur de l'entrefer, ce qui assure le guidage de la lame.

Les baguettes 210 créent un espace entre la l'âme magnétique 206 et les plaques amagnétiques 208 munies de fentes. Le fluide magnéto-rhéologique peut alors circuler librement par cet espace lorsque le champ magnétique est nul. La force à vide est donc diminuée.

L'utilisation d'une telle lame provoque le cisaillement du fluide par les lames 208 munies de fentes en créant un phénomène de raclage, ce qui augmente la résistance maximale pouvant être opposée par le dispositif d'amortissement selon la présente invention. Les lames amagnétiques munies de fentes sont en contact avec les pôles magnétiques. Lors du déplacement de la lame, les chaînes sont cassées au niveau des pôles magnétiques par le passage des dents des plaques amagnétiques, ce qui correspond au phénomène de raclage.

Par ailleurs, les lames 208 étant en contact avec les pôles, le frottement entre la lame 204 et les pôles est augmentée, ce frottement permet l'apparition du phénomène de raclage et l'utilisation d'une une âme magnétique, ce qui permet d'augmenter considérablement les forces maximales.

On peut envisager de réaliser des lames d'un seul tenant au lieu de les réaliser par assemblage ; notamment dans le cas de la lame de la figure 4, on peut envisager d'usiner ou de graver les faces des lames pour réaliser des rainures. Dans ce cas, la lame serait entièrement en matériau amagnétique.

On peut également prévoir de réaliser des lames munies de protubérances, par exemple des nervures ou des bosses de toute forme.

Le dispositif d'amortissement selon l'invention est associé à un système électronique capable de produire le courant nécessaire dans les bobines pour obtenir une viscosité apparente suffisante du fluide magnéto-rhéologique. Le dispositif peut également fonctionner en temps réel, pour cela il est associé à des capteurs de force et/ou de position et/ou de mouvement.

Le dispositif d'amortissement selon l'invention peut être utilisé pour simuler un effort au niveau d'une interface homme-machine, pour simuler la réaction d'un circuit de freinage hydraulique ou autre, pour simuler un effort dans un appareil de musculation, dans une manette de jeu, dans un dispositif haptique pour la réalité virtuelle ou la télé-opération (chirurgicale ou en environnement hostile, par exemple). Pour cela le dispositif est intégré dans un système d'amortissement comportant un ou des capteurs d'une grandeur cinématique ou dynamique représentatives du mouvement de l'élément mobile ou de l'organe de commande manuelle. Un seul capteur peut être suffisant, ainsi que la détermination a priori d'un modèle ; un deuxième capteur peut être utile pour améliorer la précision de la simulation. Le ou les capteurs peuvent être disposés directement sur l'organe de commande ou sur la lame.

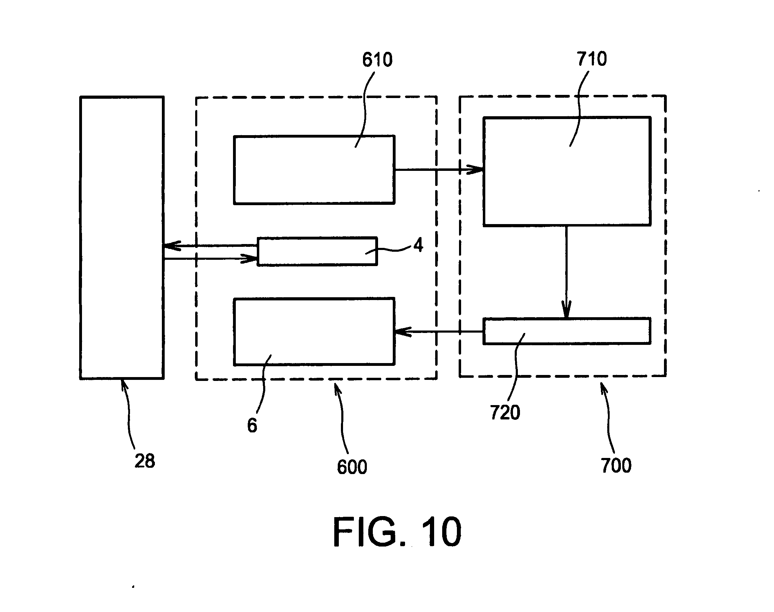

À partir des mesures temporelles effectuées par le ou les capteurs et un ou des convertisseurs analogique-numérique, un organe de contrôle 700 (figure 10) détermine en temps réel l'intensité du courant électrique permettant aux moyens 6.1, 6.2 de générer un champ magnétique adapté à l'effort à appliquer en réaction sur l'organe de commande manuelle. Le calcul du champ magnétique se fait à partir des données des captèurs et d'un modèle mathématique du comportement dynamique à simuler pré-enregistré dans la mémoire de l'organe de contrôle.

L'organe de contrôle 700 comporte un calculateur en temps réel 710, typiquement, un microprocesseur de type DSP (digital signal processor en terminologie anglaise) ou autre muni d'un ou de plusieurs convertisseurs analogique-numériques et d'une mémoire qui détermine le courant électrique à appliquer, par l'intermédiaire d'un convertisseur numérique-analogique et éventuellement de l'amplificateur de puissance 720, aux moyens de génération du champ magnétique, sur la base de modèles dynamiques du comportement mécanique, mémorisés dans le calculateur 710.

L'organe de contrôle peut également comporter un amplificateur de puissance 720.

Nous allons maintenant expliquer, de manière générale, le fonctionnement du système d'amortissement selon la présente invention sur la base du schéma de la figure 10.

Au fur et à mesure de l'actionnement de l'organe de commande manuelle 28, la lame 4 se déplace le long de l'axe Y, le capteur 610 mesure alors la variation au cours du temps d'au moins une grandeur physique caractéristique de ce déplacement, le flux temporel de mesure est transmis au calculateur 710 de l'organe de contrôle 700. Celui-ci détermine, en temps réel, la succession temporelle des valeurs de l'intensité du courant qu'il envoie aux moyens de génération du champ magnétique du simulateur 600 par l'intermédiaire éventuellement de l'amplificateur de puissance 720. La viscosité apparente du fluide magnéto-rhéologique varie alors au cours de l'actionnement, la lame cisaille le fluide magnéto-rhéologique et une réaction est alors transmise à l'organe de commande via la lame 4.

La présence des fentes permet aux chaînes de particules de traverser la lame. Pour se déplacer, la lame doit couper les chaînes par cisaillement, ce qui augmente la résistance au déplacement comparativement à une lame lisse.

Sur la figure 8, on peut voir un autre mode de réalisation d'un dispositif d'amortissement selon la présente invention.

Selon ce deuxième mode de réalisation, la lame coulisse le long de son axe longitudinal Y, le dispositif ne comporte alors qu'un seul moyen de génération de champ magnétique 6.

Le dispositif comporte un entrefer s'étendant sur toute la longueur du dispositif, l'entrefer étant muni de deux extrémités longitudinales ouvertes, la lame 4 traversant de part en part le dispositif, en partie les deux extrémités longitudinales ouvertes de l'entrefer.

Dans l'exemple représenté, la lame comporte à chacune de ses extrémités un organe 28 sur lequel est pincée par une extrémité une membrane 30 de manière similaire au premier mode de réalisation, et par une autre extrémité autour des extrémités ouvertes de l'entrefer, assurant ainsi un confinement étanche.

La structure des moyens de génération de champ magnétique peut être identique à celle des moyens 6.1, 6.2 du premier mode de réalisation et ne sera donc pas décrite en détail.

L'élément mobile peut comporter plus d'une lame et être formé de plusieurs lames disposées en parallèle.

Pour cela, on prévoit d'aménager l'entrefer de telle sorte qu'il comporte une pluralité de passages parallèles recevant chacun une lame de l'élément mobile.

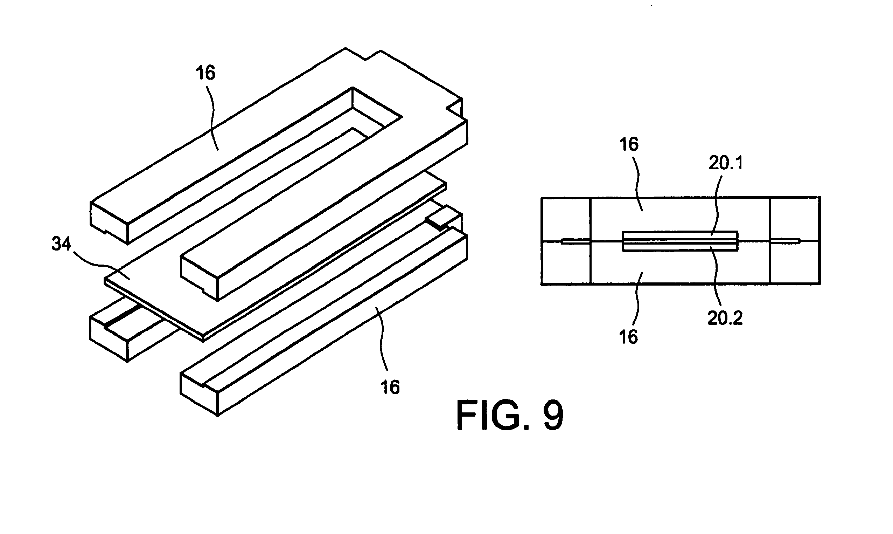

Sur la figure 9, on peut voir un exemple de réalisation d'une telle partition de l'entrefer.

Dans cet exemple, on interpose entre les pièces en U 16 une plaque 34 magnétique divisant le passage 20 en deux passages 20.1, 20.2 de mêmes dimensions, apte à recevoir chacune une lame.

Les pièces en U comportent par exemple un lamage, i.e. un léger enlèvement de matière, par exemple correspondant à la moitié de l'épaisseur de la lame 34 sur leurs faces respectivement en vis-à-vis, afin de permettre d'y insérer la lame fixe 34, de la maintenir en position et de conserver l'étanchéité.

La lame magnétique est isolée des pôles par les pièces en U 16.

La plaque 34 est avantageusement magnétique, de manière à ce que le comportement entre le fluide et cette plaque soit identique au comportement entre le fluide et les pôles magnétiques.

La configuration montrée sur la figure 9 permet de diviser l'entrefer en deux entrefers distincts, une lame amagnétique pouvant coulisser dans chacun d'eux. Ainsi la surface utile de cisaillement est doublée sans augmenter l'encombrement total du dispositif, ni la consommation électrique. La force résultante d'amortissement est donc augmentée.

Le dispositif peut donc comporter un élément mobile formé par une pluralité de lames en intercalant une pièce en U entre chaque paire de lames magnétiques.

Pour réaliser cet élément mobile à plusieurs lames, les lames représentées sur les figures 2A à 4 sont particulièrement adaptées.

Dans une variante de réalisation, on peut prévoir de remplacer les bobines traditionnelles par des bobines sur couche mince, par exemple de type PCB (Printed Circuit Board ou circuit imprimé) ou en silicium, ce qui permettrait de réduire encore l'encombrement total du système.

La présente invention permet de garder des forces à vide faibles tout en offrant des niveaux d'amortissement élevés du fait de la sollicitation du fluide magnéto-rhéologique en cisaillement et de la présence de reliefs.

Lorsque la lame est en matériau amagnétique, le guidage est inutile car un éventuel contact avec les pôles ne modifie pas le comportement du système. L'absence de guidage rend le dispositif plus simple et une miniaturisation de celui-ci plus facile.

Il est bien entendu qu'un élément mobile à plusieurs lames parallèles pourrait être utilisé dans le dispositif représenté sur la figure 7.

Il est également bien entendu que l'organe de commande manuelle 28 servant d'interface avec l'environnement extérieur peut être de réalisation plus complexe que celle décrite précédemment, celui-ci pourrait par exemple être en plusieurs parties, par exemple faire partie d'un mécanisme de type bielle ou tout autre système mécanique complexe.

En outre, les réalisations particulières des moyens générateurs de champ magnétique ne sont qu'à titre d'exemple et ne sont en aucun cas limitatives, et peuvent être modifiées tout en restant dans le cadre de la présente invention.

## Revendications

1. Dispositif d'amortissement pour opposer à l'avance d'un organe de commande manuelle (28) une réaction, ledit dispositif comportant au moins une chambre contenant du fluide magnéto-rhéologique, deux moyens générateurs de champs magnétique (6.1, 6.2) adaptable dans le fluide magnéto-rhéologique de manière à modifier sa viscosité apparente, au moins un élément mobile (4, 104 , 204) en translation apte à cisailler le fluide magnéto-rhéologique et destiné à être relié mécaniquement à l'organe de commande manuelle (28), ledit élément (4, 104, 204) comportant au moins une lame d'axe longitudinal (Y) comportant des trous et/ou des évidements et/ou des saillies, les deux moyens générateurs de champs magnétique (6.1, 6.2) définissant chacun un entrefer formant deux chambres remplies de fluide magnéto-rhéologique, lesdits entrefers étant munis d'une seule entrée (20) à une extrémité longitudinale, les deux moyens générateurs de champ magnétique (6.1, 6.2) étant disposés à distance l'un de l'autre et de telle sorte que les entrées (20) des entrefers soient en vis-à-vis et que les entrefers reçoivent chacun une extrémité longitudinale de la lame (4), la lame (4) se déplaçant selon son axe (Y).

2. Dispositif d'amortissement selon la revendication 1, dans lequel la lame (4, 104) comporte des fentes parallèles.

3. Dispositif d'amortissement selon la revendication 2, dans lequel les fentes sont orthogonales à une direction de déplacement de la lame.

4. Dispositif d'amortissement selon la revendication 1, 2 ou 3, dans lequel la lame (4) est réalisée en matériau amagnétique.

5. Dispositif d'amortissement selon la revendication 1, dans lequel la lame (104) comporte une âme (106) en matériau magnétique munie de trous et/ou d'évidements et/ou de saillies et des bandes (108) en matériau amagnétique sur ses extrémités latérales sur ses deux faces.

6. Dispositif d'amortissement selon la revendication 1, dans lequel la lame (204) comporte une âme pleine en matériau magnétique ou amagnétique (206) et deux plaques (208) en matériau amagnétique munies de fentes recouvrant chaque face de l'âme pleine (206).

7. Dispositif d'amortissement selon l'une des revendications 1 à 6, dans lequel l'élément mobile comporte plusieurs lames parallèles.

8. Dispositif d'amortissement selon l'une des revendications 1 à 7, comportant une membrane souple (30) entourant les entrées (20) et l'organe de commande (28) réalisant un ensemble étanche, l'organe de commande manuelle (28) étant fixé sensiblement au centre de la lame (4) orthogonalement à son axe longitudinal (Y).

9. Dispositif d'amortissement selon la revendication 8, dans lequel l'organe de commande (28) est en deux parties (28.1, 28.2), une partie (28.2) fixée sur la lame et une partie fixée (28.1) sur la partie (28.2) fixée sur la lame, la membrane (30) étant pincée entre les deux parties (28.1, 28.2).

10. Dispositif d'amortissement selon l'une des revendications précédentes prise en combinaison avec la revendication 7, dans lequel le au moins un entrefer est divisé en autant d'entrefers que de lames au moyen de plaques magnétiques, chaque entrefer recevant une lame.

11. Système d'amortissement comportant un dispositif amortisseur selon l'une des revendications précédentes, une source d'alimentation en énergie électrique du ou des moyens de génération de champ magnétique, au moins un capteur d'une grandeur cinématique et/ou dynamique représentative du mouvement de cet élément ou de l'organe de commande et un organe de contrôle, ledit capteur étant relié à l'organe de contrôle, lui-même relié aux moyens de génération d'un champ magnétique, l'ensemble étant tel que la viscosité apparente du fluide magnéto-rhéologique varie au cours du déplacement de l'organe de commande manuelle.

12. Système d'amortissement selon la revendication 11, dans lequel le au moins un capteur est un capteur, de course, de vitesse et/ou d'accélération.

13. Système de simulation du type interface haptique comportant un système selon la revendication 11 ou 12.

## Claims

1. Damping device to oppose a reaction to the displacement of a manual operating device (28) said damping device comprising at least one chamber containing the magneto-rheological fluid, two means of generating a variable magnetic field (6.1, 6.2) in the magneto-rheological fluid so as to modify its apparent viscosity, at least one element (4, 104, 204) free to move in translation capable of shearing the magneto-rheological fluid and designed to be mechanically connected to the manual operating device (28), said element (4, 104, 204) comprising at least one blade with a longitudinal axis (Y) comprising holes and/or recesses and/or projections, the two magnetic field generation means (6.1, 6.2) each defining an airgap forming two chambers full of magneto-rheological fluid, said airgaps being provided with a single entrance (20) at one longitudinal end, the two magnetic field generation means (6.1, 6.2) being arranged at a distance from each other and such that the entrances (20) to the airgaps are facing each other and that a longitudinal end of the blade (4) fits into each of the airgaps, the blade (4) moving along its axis (Y).

2. Damping device according to claim 1, in which the blade (4, 104) comprises parallel slits.

3. Damping device according to claim 2, in which the slits are orthogonal to a direction of movement of the blade.

4. Damping device according to claim 1, 2 or 3, in which the blade (4) is made of non-magnetic material.

5. Damping device according to claim 1, in which the blade (104) comprises a core (106) made of magnetic material in which holes, and/or recesses and/or projections are formed and strips (108) made of a non-magnetic material on its side ends and on its two faces.

6. Damping device according to claim 1, in which the blade (204) comprises a solid core made of a magnetic or non-magnetic material (206) and two plates (208) made of non-magnetic material covering each face of the solid core (206), slits being formed in the two plates.

7. Damping device according to one of claims 1 to 6, in which the mobile element comprises several parallel blades.

8. Damping device according to one of claims 1 to 7, comprising a flexible membrane (30) surrounding the entrances (20) and the operating device (28) making a sealed assembly, the manual operating device (28) being fixed approximately at the centre of the blade (4) orthogonal to its longitudinal axis (Y).

9. Damping device according to claim 8, in which the operating device (28) is made in two parts (28.1, 28.2), one part (28.2) fixed on the blade and another part (28.1) fixed on the part (28.2) fixed on the blade, the membrane (30) being trapped between the two parts (28.1, 28.2).

10. Damping device according to one of the previous claims together with claim 7, in which the at least one airgap is divided by means of magnetic plates such that there is one airgap for each blade, one blade being used in each airgap.

11. Damping system comprising a damping device according to one of the previous claims, an electrical power supply source for the magnetic field generation means, at least one sensor of a kinematic and/or dynamic magnitude representing the movement of this element or the operating device and an control device, said sensor being connected to the control device itself connected to the magnetic field generation means, the assembly being such that the apparent viscosity of the magneto-rheological fluid varies during displacement of the manual operating device.

12. Damping system according to claim 11, in which the at least one sensor is a displacement, velocity and/or acceleration sensor.

13. Haptic type interface simulation system comprising a system according to claim 11 or 12.

## Patentansprüche

1. Dämpfungsvorrichtung, um dem Vorschub eines Handsteuerungsorgans (28) eine Reaktion entgegenzusetzen, wobei die genannte Vorrichtung umfasst: wenigstens eine ein magnetorheologisches Fluid enthaltende Kammer, zwei Einrichtungen (6.1, 6.2), fähig in dem magnetorheologischen Fluid ein anpassbares magnetisches Feld zur Modifizierung seiner Scheinviskosität zu erzeugen, wenigstens ein translatorisch bewegliches Element (4, 104, 204), welches das magnetorheologische Fluid durchschneiden kann und mechanisch mit dem Handsteuerungsorgan (28) verbunden ist, wobei das genannte Element (4, 104, 204) wenigstens eine Lamelle mit Längsachse (Y) und Löchern und/oder Aussparungen und/oder Vorsprüngen umfasst, wobei jede der beiden Magnetfelderzeugungseinrichtungen (6.1, 6.2) einen zwei mit magnetorhelogischem Fluid gefüllte Kammern bildenden Spalt definiert, wobei die genannten Spalte einen einzigen Eingang (20) an einem Längsende aufweisen und die beiden Magnetefelderzeugungseinrichtungen (6.1, 6.2) voneinander beabstandet und so angeordnet sind, dass sich die Eingänge (20) der Spalte gegenüberstehen, und dass jeder der Spalte ein Längsende der Lamelle (4) aufnimmt, wobei die Lamelle (4) sich gemäß ihrer Achse (Y) verschiebt.

2. Dämpfungsvorrichtung nach Anspruch 1, bei der die Lamelle (4, 104) parallele Schlitze aufweist.

3. Dämpfungsvorrichtung nach Anspruch 2, bei der die Schlitze orthogonal zu einer Verschiebungsrichtung der Lamelle sind.

4. Dämpfungsvorrichtung nach Anspruch 1, 2 oder 3, bei der die Lamelle (4) aus einem unmagnetischen Material ist.

5. Dämpfungsvorrichtung nach Anspruch 1, bei der die Lamelle (104) einen Löcher und/oder Aussparungen und/oder Vorsprünge aufweisenden Steg bzw. Kern (106) aus magnetischem Material umfasst und an ihren seitlichen Enden auf ihren beiden Seiten Bänder bzw. Streifen (108) aus unmagnetischem Material.

6. Dämpfungsvorrichtung nach Anspruch 1, bei dem die Lamelle (204) einen vollen Kern aus magnetischem oder unmagnetischem Material (206) und zwei jede Seite der vollen Lamelle (206) bedeckende Platten (208) aus unmagnetischem Material, versehen mit Schlitzen, umfasst.

7. Dämpfungsvorrichtung nach einem der Ansprüche 1 bis 6, bei dem das bewegliche Element mehrere parallele Lamellen umfasst.

8. Dämpfungsvorrichtung nach einem der Ansprüche 1 bis 7, eine zur Realisierung einer dichten Einheit die Eingänge (20) und das Steuerungsorgan (28) umgebende nachgiebige Membran (30) umfassend, wobei das Handsteuerungsorgan (28) im Wesentlichen im Zentrum der Lamelle, orthogonal zu seiner Längsachse (Y), befestigt ist.

9. Dämpfungsvorrichtung nach Anspruch 8, bei der das Steuerungsorgan (28) aus zwei Teilen (28.1, 28.2) besteht, einem an der Lamelle befestigten Teil (28.1) und einem an dem an der Lamelle befestigten Teil (28.1) befestigten Teil (28.2), wobei die Membran (30) zwischen den beiden Teilen (28.1, 28.2) eingeklemmt ist.

10. Dämpfungsvorrichtung nach einem der vorhergehenden Ansprüche, in Kombination mit Anspruch 7, in dem der wenigstens eine Spalt mittels magnetischer Platten in ebenso viele Spalte wie Lamellen unterteilt ist, wobei jeder Spalt eine Lamelle aufnimmt.

11. Dämpfungssystem, umfassend wenigstens eine Dämpfungsvorrichtung nach einem der vorhergehenden Ansprüche, eine Elektroenergie-Versorgungsquelle der Magnetfelderzeugungseinrichtung oder -einrichtungen, wenigstens einen Sensor einer kinematischen und/oder dynamischen Größe, repräsentativ für die Bewegung dieses Elements oder des Steuerungsorgans, und ein Kontrollorgan, wobei der genannte Sensor mit dem seinerseits mit den Magnetfelderzeugungseinrichtungen verbundenen Kontrollorgan verbunden ist, und das Ganze so ist, dass die Scheinviskosität des magnetorheologischen Fluids sich im Laufe der Verschiebung des Handsteuerungsorgans ändert.

12. Dämpfungssystem nach Anspruch 11, bei dem der wenigstens eine Sensor ein Weg-, Geschwindigkeits- und/oder Beschleunigungssensor ist.

13. Stimulationssystem des Typs Haptisches Interface, ein System nach Anspruch 11 oder 12 umfassend.
